# EUROPÄISCHE PATENTSCHRIFT

(11) **EP 0 701 876 B1**
(45) Veröffentlichungstag und Bekanntmachung des Hinweises auf die Patenterteilung: **15.04.1998**
(21) Anmeldenummer: 95112986.5
(22) Anmeldetag: 18.08.1995
(51) Int. Cl.: B23K 20/10, B29C 65/08

(54) **Verfahren zum Kompaktieren und anschliessenden Schweissen von elektrischen Leitern**
Method for compacting and welding electrical wires
Méthode de compactage et de soudage de fils conducteurs

(30) Priorität: 22.08.1994 DE 4429684; 22.08.1994 DE 4429729
(43) Veröffentlichungstag der Anmeldung: 20.03.1996
(73) Patentinhaber: SCHUNK Ultraschalltechnik GmbH, D-35435 Wettenberg (DE)
(72) Erfinder: Wagenbach, Udo, D-35418 Buseck (DE); Thoms, Enno, D-35435 Wettenberg (DE); Stroh, Dieter, D-35435 Wettenberg (DE)
(74) Vertreter: Stoffregen, Hans-Herbert, Dr. Dipl.-Phys.

(56) Entgegenhaltungen:
- EP-A- 0 421 018
- WO-A-91/09704
- DE-A- 4 120 245
- INTERPLASTICS, Bd. 14, Nr. 4, August 1991 MILANO ( IT ), Seiten 84-86, XP 000271298 G. PICCHIO 'Macchine, novità nella saldatura a ultrasuoni.'
- DATABASE WPI Week 9345 5.Januar 1994 Derwent Publications Ltd., London, GB; AN 93-358933 & SU-A-1 773 643 (PRECISE ELTRN EQUIP CONS BUR) , 7.November 1992

## Beschreibung

Die Erfindung bezieht sich auf ein Verfahren zum Kompaktieren und anschließenden Verschweißen von elektrischen Leitern, insbesondere zur Herstellung von Durchgangs-oder Endknoten von Litzen mittels Ultraschall in einem an die Leiter anpassbaren Verdichtungsraum, wobei die zu verschweißenden Leiter zunächst kompaktiert und sodann verschweißt werden.

Zum Kompaktieren und anschließenden Verschweißen von elektrischen Leitern, insbesondere zur Herstellung von Durchgangs- und Endknoten von Litzen, werden Ultraschallschweißvorrichtungen eingesetzt, die Sonotroden für die Erzeugung von Ultraschallschwingungen aufweisen. Ein Abschnitt der jeweiligen Sonotrode bildet eine erste seitliche Begrenzungsfläche eines z. B. in Höhe und Breite verstellbaren, stirnseitig offenen Verdichtungsraums. Die anderen Begrenzungsflächen des Verdichtungsraums können Abschnitte einer mehrteiligen Gegenelektrode sein. Beispiele für Ultraschallschweißvorrichtungen sind unter den Bezeichnungen RK 2000 oder Minic Automatic der Schunk Ultraschalltechnik GmbH, Wettenberg, Bundesrepublik Deutschland, angebotene Geräte.

Um den heutigen Anforderungen zu genügen, muß sichergestellt sein, daß Materialänderungen bzw. ein Wechsel von die Ultraschallschweißvorrichtung bedienenden Personen einen Einfluß auf die verschweißten Endprodukte nicht zeigen.

Der Erfindung liegt daher das Problem zugrunde, ein Verfahren der eingangs beschriebenen Art dahingehend weiterzuentwickeln, daß aus während der für die Erzeugung verschweißter elektrischer Leiter ablaufenden Arbeitsgänge gewonnenen Parametern, die für die Eigenschaften der hergestellten Produkte maßgebend sind, automatisch sichergestellt werden kann, daß die verschweißten Produkte innerhalb zulässiger enger Fertigungstoleranzen liegen.

Das Problem wird bei einem Verfahren der eingangs beschriebenen Art erfindungsgemäß dadurch gelöst, daß nach der Kompaktierung der Leiter ein die Größe der Kompaktierung angebender Wert gemessen oder aus Meßwerten bestimmt und wenigstens mit einem vorgegebenen oberen und einem unteren, auf einen Sollwert bezogenen Grenzwert verglichen wird, daß bei einem Wert, der außerhalb des durch die Grenzwerte eingeschlossenen Bereichs liegt, die Schweißung nicht ausgeführt und bei einem Wert, der innerhalb des durch die Grenzwerte eingeschlossenen Bereichs liegt, der Wert mit bei vorherigen Arbeitsgängen bestimmten Werten zu einem neuen Sollwert für die Überprüfung nachfolgender Kompaktierarbeitsgänge verrechnet wird und die Schweißung ausgeführt wird und/oder daß ein bei oder nach Beendigung der Schweißung vorhandener Wert wenigstens einer für den Schweißvorgang maßgeblichen Größe gemessen oder aus Meßwerten bestimmt und wenigstens mit einem oberen und unteren, auf einen Sollwert bezogenen Grenzwert verglichen wird und daß bei einem außerhalb des durch die Grenzwerte eingeschlossenen Bereichs liegenden Wert ein Fehler angezeigt und bei einem innerhalb dieses Bereichs liegenden Wert dieser mit bei vorherigen Arbeitsgängen bestimmten Werten zu einem neuen Sollwert für die Überprüfung nachfolgender Schweißarbeitsgänge verrechnet wird. Mit diesem Verfahren werden Sollwerte, mit denen die Arbeitsweise der Ultraschallschweißvorrichtung während des Ablaufs des Herstellungsverfahrens geprüft wird, mittels der während aufeinanderfolgender Herstellungsarbeitsgänge oder -prozesse gemessener Ist-Werte fortlaufend den jeweiligen Gegebenheiten angepaßt. Hierdurch ist erstmalig die Möglichkeit gegeben, daß die für das Kompaktieren bzw. Schweißen charakteristischen Parameter dynamisch an das vorausgegangene Verdichten bzw. Schweißen angepaßt werden. Somit erfolgt eine weitere Verbesserung der Fertigungstoleranzen aufgrund einer dynamischen Sollwertanpassung. Ferner kann hierdurch eine dynamische Anpassung an die tatsächliche Prozeßstreuung vorgenommen werden.

Auf diese Weise werden gleichmäßige Schweißergebnisse erzielt. Weiterhin wird verhindert, daß bei Abweichungen von notwendigen Herstellungsbedingungen Produkte erzeugt bzw. nicht als fehlerhaft erkannt werden.

Bei einer bevorzugten Ausführungsform werden die Leiter während der Kompaktierung mit Ultraschall beaufschlagt. Die Stärke dieser Ultraschallbeaufschlagung ist geringer als die für die Verschweißung der Leiter notwendige Stärke. Die zusätzliche Ultraschallbehandlung während der Kompaktierung bewirkt, daß die Leiter stärker kompaktiert werden, was für die nachfolgende Messung und Schweißung besonders günstig ist.

Mit anderen Worten wird durch einen sogenannten Ultraschallvorimpuls bzw. eine Vorimpulsfolge eine Vergleichmäßigung des Kompaktierens erreicht.

Die Ultraschallbehandlung der Leiter während des Kompaktierens hat eigenständigen erfinderischen Gehalt, da sie auch ohne die oben beschriebene Sollwertanpassung zu einer Verbesserung bei der nachfolgenden Verschweißung führt.

Als Größe, die den Schweißvorgang maßgeblich beeinflußt, kann der Querschnitt des Verdichtungsraums ausgewählt werden, der von den Leitern bei oder nach Beendigung des Schweißarbeitsgangs eingenommen bzw. ausgefüllt wird. Insbesondere ist jedoch die Höhe oder die Breite des Verdichtungsraums als maßgebender Parameter auszuwählen.

Bei einer weiteren bevorzugten Ausführungsform werden jeweils der bei oder nach Beendigung der Kompaktierung gemessene oder aus Meßwerten bestimmte Wert und/oder der bei oder nach Beendigung der Schweißung gemessene oder aus Meßwerten bestimmte Wert des Schweißmaßes je mit einem fest vorgegebenen oberen und unteren Grenzwert und mit einem weiteren oberen und unteren Grenzwert verglichen, der sich jeweils aus dem für den jeweiligen Arbeitsgang des Herstellungsprozesses berechneten Sollwert für die Kompaktierung bzw. Schweißung zuzüglich eines zulässigen positiven oder negativen Toleranzwertes zusammensetzt. Die fest vorgegebenen Grenzwerte, die im folgenden auch als äußere Grenzwerte bezeichnet werden, werden beim Einrichten der für die Durchführung des Verfahrens vorgesehenen Ultraschallschweißvorrichtung bestimmt und gespeichert. Die mit Hilfe der Sollwerte gebildeten Grenzwerte, die im folgenden auch als innere Grenzwerte bezeichnet werden, erlauben es, geringe Abweichungen zwischen aufeinanderfolgenden Herstellungsabläufen zu erfassen. Daraus lassen sich Rückschlüsse auf Tendenzen ziehen, die material- oder vorrichtungsbedingt sind und die Qualität in unerwünschter Weise beeinflussen. Es lassen sich z.B. Langzeiteinflüsse verfolgen, wodurch vorbeugende Maßnahmen zur Vermeidung eines Vorrichtungsausfalls bzw. zur Gewährleistung einer gleichbleibenden Produktqualität getroffen werden können.

Insbesondere lassen sich jedoch durch das erfindungsgemäße Verfahren bereits kleine Fehler sicher erkennen.

Vorzugsweise werden die Sollwerte als arithmetische Mittelwerte aus mehreren Werten vorangegangener Herstellungsschritte berechnet. Die Anzahl der zur Bestimmung der Mittelwerte heranzuziehenden Meßwerte kann zwischen einigen und zig Werten liegen. Bei dem unmittelbar auf das Einrichten der Ultraschallschweißvorrichtung folgenden Herstellungsschritt werden die beim Einrichten ermittelten Sollwerte verwendet.

Bei der Über- bzw. Unterschreitung der äußeren oder inneren Grenzwerte werden zweckmäßigerweise Fehlermeldungen erzeugt und die während des fehlerhaften Arbeitsablaufs gemessenen Werte für die nachfolgende Auswertung gespeichert.

Die erfindungsgemäße Lehre ist auch auf ein Verfahren zum Schweißen und gegebenenfalls vorherigen Kompaktieren von Material wie Kunststoffmaterial wie -pulver mittels Ultraschall in einem das Material aufnehmenden Verdichtungsraum anwendbar, das sich dadurch auszeichnet, daß ein bei oder nach Beendigung der Schweißung vorhandener Wert wenigstens einer für den Schweißvorgang maßgeblichen Größe gemessen oder aus Meßwerten bestimmt und wenigstens mit einem oberen und unteren, auf einen Sollwert bezogenen Grenzwert verglichen wird und daß bei einem außerhalb des durch die Grenzwerte eingeschlossenen Bereichs liegenden Wert ein Fehler angezeigt und bei einem innerhalb dieses Bereichs liegenden Wert dieser mit bei vorherigen Arbeitsgängen bestimmten Werten zu einem neuen Sollwert für die Überprüfung nachfolgender Schweißarbeitsgänge verrechnet wird und/oder daß nach der Kompaktierung des Materials ein die Größe der Kompaktierung angebender Wert gemessen oder aus Meßwerten bestimmt und wenigstens mit einem vorgegebenen oberen und einem unteren, auf einen Sollwert bezogenen Grenzwert verglichen wird, daß bei einem Wert, der außerhalb des durch die Grenzwerte eingeschlossenen Bereichs liegt, die Schweißung nicht ausgeführt und bei einem Wert, der innerhalb des durch die Grenzwerte eingeschlossenen Bereichs liegt, der Wert mit bei vorherigen Arbeitsgängen bestimmten Werten zu einem neuen Sollwert für die Überprüfung nachfolgender Kompaktierarbeitsgänge verrechnet wird und die Schweißung ausgeführt wird.

Ausgestaltungen ergeben sich aus den vorstehend und nachstehend im Ausführungsbeispiel erfolgten Erläuterungen, in denen als Material elektrische Leiter angegeben sind, die jedoch sinngemäß durch Kunststoffmaterial wie -pulver ersetzt werden können.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: einen Ausschnitt einer Ultraschallschweißvorrichtung mit einem veränderbaren Verdichtungsraum,
- Fig. 2: ein Fließbild eines mit der Vorrichtung gemäß Fig. 1 ausgeübten Verfahrens zum Verschweißen von insbesondere elektrischen Leitern und
- Fig. 3: ein Zeitdiagramm eines typischen Verlaufs von Ist- und Sollwerten einer Ultraschallschweißvorrichtung gemäß Fig. 1 während der Herstellung von miteinander verschweißten Litzen in aufeinanderfolgenden Herstellungsschritten.

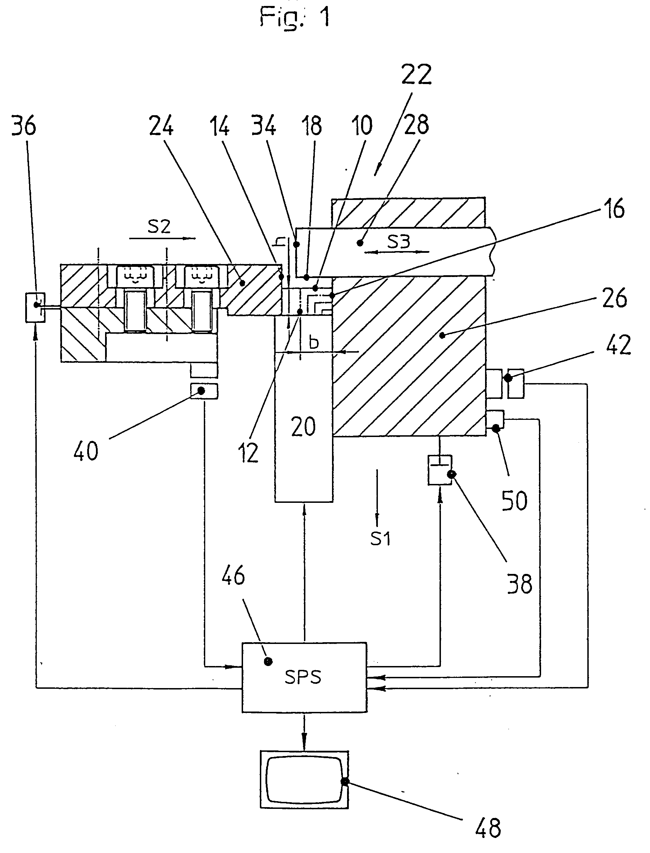

In Fig. 1 ist ein Ausschnitt einer Ultraschallschweißvorrichtung zum Verschweißen elektrischer Leiter dargestellt, soweit ein auf zu verschweißende Leiter einstellbarer Verdichtungsraum (10) betroffen ist. Dabei kann die Ultraschallschweißvorrichtung selbst grundsätzlich einer Konstruktion entsprechen, die dem Gerät RK 2000 oder Minic Automatic der Schunk Ultraschalltechnik GmbH, Wettenberg, entspricht.

Der Verdichtungsraum (10) weist im Ausführungsbeispiel einen rechteckigen Querschnitt auf und ist stirnseitig offen, um durch diesen die zu verschweißenden Leiter zu führen. Verdichtungsräume mit anderen Querschnitten sind selbstverständlich auch möglich, wie insbesondere mit einem trapezförmigen Querschnitt.

Der Verdichtungsraum (10) wird seitlich von Begrenzungsflächen (12), (14), (16) und (18) umschlossen, die einerseits von einem Abschnitt einer Sonotrode (20) und andererseits von einer mehrteiligen Gegenelektrode (22) wie Amboß begrenzt werden.

Die mehrteilige Gegenelektrode (22) umfaßt einen Schieber (24), der entlang der von der Sonotrode (12) zur Verfügung gestellten Begrenzungsfläche (12) verschiebbar ist und die seitliche Begrenzungsfläche (14) bildet. Die Bewegungsrichtung des Schiebers (24) ist durch den Pfeil (S2) angedeutet. Dem Schieber (24) gegenüberliegend ist ein zweites Teil (26) der Gegenelektrode (22) angeordnet, welches parallel zur Begrenzungsfläche (14), also senkrecht zur Sonotrodenfläche (12) verschiebbar ist (S1). Das zweite Teil (26) nimmt einen als Nase zu bezeichnenden Abschnitt (28) verschiebbar auf, welche entsprechend dem Pfeil (S3) parallel zur Fläche (12) bewegbar ist.

Der von den Begrenzungsflächen (12), (14), (16) und (18) umschlossene Raum wird in Abhängigkeit von den jeweils zu verschweißenden Leitern verändert.

Der Verdichtungsraum (10) wird zum Kompaktieren der eingelegten Leiter, also zum Vorverdichten, auf ein zuvor festgelegtes Höhen-Breiten-Verhältnis eingestellt. Dies ist in Fig. 1 durch in den Verdichtungsraum eingezeichnete Rechtecke unterschiedlicher Größe symbolisiert.

Der Schieber (24) ist mit einem Antrieb (36), insbesondere einem pneumatischen oder hydraulischen Antrieb, verbunden, durch den der Schieber (24) in Richtung des Pfeils S2 und umgekehrt bewegbar ist. Das Teil (26) der Gegenelektrode (22) ist mit einem Antrieb (38) verbunden, der ebenfalls vorzugsweise als pneumatischer oder hydraulischer Antrieb ausgebildet sein kann.

Mittels des Antriebs (38) ist das Teil (26) in Richtung des Pfeils S1 und umgekehrt verschiebbar. Der Schieber (24) ist weiterhin mit einem Lagegeber (40) verbunden, mit dem die Stellung des Schiebers (24) in bezug auf eine Ruhelage meßbar ist. Auch das Teil (26) ist mit einem Lagegeber (42) verbunden, mit dem die Stellung des Teils (26) in bezug auf eine Ruhelage festgestellt werden kann.

Eine Steuereinrichtung (46), z.B. eine speicherprogrammierbare Steuerung ist mit den Lagegebern (40), (42), der Ultraschall abgebundenen Sonotrode (20) sowie mit nicht näher dargestellten Steuerelementen für die Antriebe (36), (38) verbunden. An die Steuereinrichtung (46) ist ein Monitor (48) angeschlossen.

Die Höhe (h) und/oder die Breite (b) des Vorverdichtungsraums (10) wird mittels zumindest eines Lagegebers, im Ausführungsbeispiel von den Lagegebern (40), (42) erzeugten und von der Steuereinrichtung (46) ausgewerteten Meßwerten bestimmt. Verschiedenen Querschnitten bzw. unterschiedlichen Höhen oder Breiten des Verdichtungsraums (10) sind verschiedene Parameter zugeordnet, die mit der Ultraschallschweißvorrichtung zum Schweißen der Leiter eingestellt werden. Es handelt sich um Schweißparameter wie Schweißenergie, Schweißamplitude, Schweißzeit und Schweißdruck.

Während des Schweißens wird insbesondere die Höhe (h) des Verdichtungsraums (10) verändert, wobei die Breite (b) gleich bleibt, da z.B. nach dem Abschluß einer auf die Leiter ausgeübten Vorverdichtung der Schieber (24) arretiert wird.

Mit dem Teil (26) kann auch ein Kraftsensor (50) verbunden sein, mit dem die auf die in den Verdichtungsraum (10) eingelegten Leiter mittels des Teils (26) ausgeübte Kraft gemessen wird. Der Kraftsensor ist ebenfalls an die Steuereinheit (46) angeschlossen. Selbstverständlich kann auch eine indirekte Messung durch Druckregelung erfolgen.

Mit der oben beschriebenen Vorrichtung werden die in den Verdichtungsraum (10) eingelegten Leiter kompaktiert, indem der Schieber (24) und das Teil (22) so bewegt werden, daß der Querschnitt des Vorverdichtungsraums (10) reduziert wird. Kräfte für die Einstellung des Querschnitts werden von der Steuereinheit (46) über an die Antriebe (36), (38) ausgehende Signale ausgelöst, wobei der jeweils sich einstellende Querschnitt des Vorverdichtungsraums mittels der von den Lagegebern (40), (42) erzeugten Meßweite von der Steuereinheit (46) bestimmt wird.

Der Querschnitt bzw. die Höhe oder die Breite des Vorverdichtungsraums (10) am Ende oder nach Beendigung der Vorverdichtung ist demnach ein Maß für den Grad der Vorverdichtung, d.h. die Geometrie des Vorverdichtungsraums kann als Vorverdichtungsmaß oder Kompaktiermaß verwendet bzw. ausgewertet werden. Da z.B. nur die Breite (b) und/oder die Höhe (h) des Vorverdichtungsraums (10) veränderbar sind, läßt sich der Querschnitt schnell und einfach bestimmen.

Wenn ein Kraftsensor (50) vorhanden ist, kann auch die auf die Leiter ausgeübte Kraft als Vorverdichtungsmaß verwendet werden.

Während des Schweißvorgangs wird der Querschnitt -grundsätzlich nur die Höhe oder die Breite- des Vorverdichtungsraums erneut verändert, wobei der bei oder nach Beendigung des Schweißens vorhandene Querschnitt ein Maß für die Qualität der Schweißung der Leiter ist.

Da das Kompaktiermaß und das Schweißmaß mittels Stellgliedern wie des Schiebers bzw. des Teils (26) einstellbar sind, werden in die Steuereinheit (46) entsprechende Sollwerte eingegeben. Weiterhin werden in die Steuereinheit (46) feste obere und untere Grenzwerte für die Kompaktiermaße und Schweißmaße eingegeben. Diese Grenzwerte werden als äußere Grenzwerte bezeichnet. Weitere Grenzwerte, die im folgenden als innere Grenzwerte bezeichnet werden und die jeweils eine obere und eine untere Grenze für das Kompaktiermaß und/oder das Schweißmaß bei der Herstellung von verschweißten Leitern festlegen, werden mit der Steuereinheit (46) bestimmt.

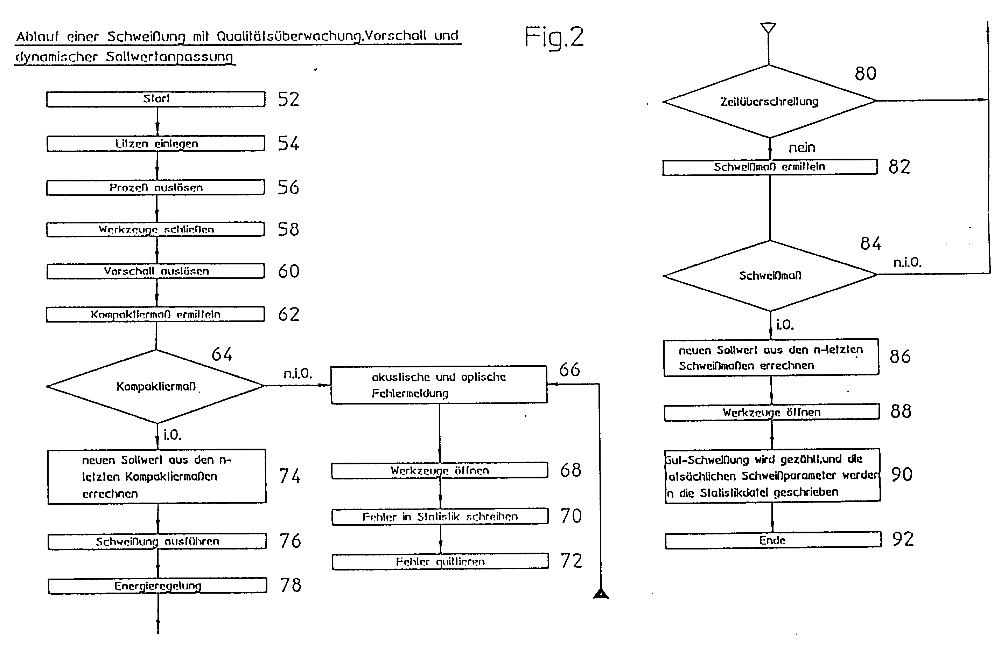

Mit der oben beschriebenen Vorrichtung wird das folgende in Verbindung mit dem Fließschema der Fig. 2 beschriebene Verfahren ausgeübt.

In einem ersten Schritt (52), der in Fig. 2 mit "Start" bezeichnet ist, wird die Ultraschallschweißvorrichtung in Gang gesetzt. Danach wird in einem Schritt (54) eine bestimmte Litzenkombination in den Verdichtungsraum (10) eingelegt. Anschließend wird in einem Schritt (56) der Herstellungsprozeß für die verschweißten Leiter gestartet. Danach wird in einem Schritt (58) der Verdichtungsraum (10) geschlossen, indem der Schieber (24) und das Teil (26) in Richtungen, die durch die Pfeile (S2) und (S1) bezeichnet sind, angetrieben bzw. bewegt werden. In Fig. 2 ist der Schritt (58) mit "Werkzeuge schließen" bezeichnet.

Während des Schritts (58) oder danach wird ein Ultraschallimpuls oder eine Folge davon erzeugt, um die Leiter stärker zu kompaktieren. Hierdurch erfolgt im eigentlichen Sinne eine Vergleichmäßigung des Kompaktierens (Schritt (60)). Nach dem Kompaktieren wird in einem anschließenden Schritt (62) das Kompaktiermaß aus der Geometrie des Verdichtungsraums, der durch die Kenntnis der Breite und/oder Höhe oder einer anderen spezifischen Größe bestimmt wird, ermittelt. Es folgt ein Schritt (64), in dem das ermittelte Kompaktiermaß zuerst mit einem oberen und einem unteren "äußeren" Grenzwert verglichen wird.

Der obere und der untere äußere Grenzwert werden beim Einrichten der Ultraschallschweißvorrichtung bestimmt. Die Grenzwerte legen die äußeren Grenzen für die Pressmaße fest. Danach wird das Kompaktiermaß mit einem oberen und unteren "inneren" Grenzwert verglichen. Der obere und der untere "innere" Grenzwert werden aus dem Sollwert des Pressmaßes zuzüglich eines ersten Toleranzwerts und abzüglich eines zweiten Toleranzwerts bestimmt. Die Toleranzwerte müssen dabei nicht gleich groß sein.

Wird ein oberer äußerer oder innerer Grenzwert überschritten oder ein unterer äußerer oder innerer Grenzwert unterschritten, dann folgt ein Schritt (66), in dem eine optische und/oder akustische Fehlermeldung erzeugt wird, was zu einem Schritt (68) führt, in dem die Werkzeuge geöffnet werden, so daß das Herstellungsverfahren nicht mehr fortgesetzt wird. Die Leiter können aus der Ultraschallschweißvorrichtung herausgenommen werden. Mit dem Öffnen der Werkzeuge oder danach wird der Fehler in einem Schritt (70) in eine Statistik eingeschrieben, die in einer Datei in der Steuereinheit (46) vorhanden ist. Bevor die Ultraschallschweißvorrichtung wieder starten kann, muß in einem Schritt (72) der Fehler quittiert werden bzw. bei Überschreiten der äußeren Grenzen der Prozeß überprüft und gegebenenfalls korrigiert werden.

Wenn das Kompaktiermaß innerhalb der durch die Grenzwerte eingeschlossenen Bereiche liegt, dann folgt ein Verfahrensschritt (74), in dem aus Kompaktiermaßen, die in vorausgegangenen n-Herstellungsvorgängen bzw. -schritten gemessen und abgespeichert werden und dem gerade bestimmten Wert ein neuer Sollwert für das Kompaktiermaß bestimmt wird. In diese Kompaktiermaße ist das Kompaktiermaß des gerade ablaufenden Herstellungsvorgangs daher einbezogen. Der Sollwert wird z.B. als arithmetischer Mittelwert für die Prüfung des nächsten Herstellungsvorgangs verschweißter Leiter bestimmt. Die Zahl n beläuft sich z.B. zwischen 3 und 50. Nach dem Einrichten der Ultraschallschweißvorrichtung, wenn noch kein Kompaktiermaß gemessen oder bestimmt wurde, wird das Einrichtmaß als Sollwert vorgegeben.

Auf den Schritt (74) folgt ein Schritt (76), in dem die Schweißung ausgeführt wird. Während dieses Schritts stellt die Steuereinheit (46) bzw. -einrichtung die zugeordneten Schweißparameter wie Schweißenergie, Schweißamplitude, Schweißzeit und Schweißdruck ein. Die Schweißparameter werden während des folgenden, in Fig. 2 mit Energieregelung bezeichneten Schritts (78) aufrechterhalten. Nach dem Schritt (78) wird im Schritt (80) geprüft, ob die für die Energiezuführung vorgesehene Zeit überschritten wird. Mit dem Schritt (78) wird nämlich auch ein Zeitglied angestoßen. Ist die zulässige Zeit überschritten, wird auf den Schritt (66) übergegangen.

Ist die Zeitgrenze für die Energiezuführung eingehalten worden, dann wird auf einen Schritt (82) übergegangen, in dem das Schweißmaß ermittelt wird. Das Schweißmaß ist, wie oben angegeben, die bei oder nach dem Ende des Schweißvorgangs gemessene Geometrie mit Höhe und/oder Breite des Vorverdichtungsraums (10), der während des Schweißens verändert wird.

Die Bestimmung des Schweißmaßes geschieht wie die Bestimmung des Kompaktiermaßes mittels der von den Lagegebern (40), (42) erzeugten Meßwerte. Es folgt ein Schritt (84), in dem das ermittelte Schweißmaß mit Grenzwerten verglichen wird. Vorgegeben sind ein oberer und unterer "äußerer" fester Grenzwert. Die beiden festen äußeren Grenzwerte werden beim Einrichten der Ultraschallschweißvorrichtung bestimmt. Weiterhin wird das Schweißmaß mit einem oberen und unteren "inneren" Grenzwert verglichen. Die inneren Grenzwerte werden aus den Sollwerten des Schweißmaßes zuzüglich eines ersten Toleranzwertes und abzüglich eines zweiten Toleranzwertes bestimmt. Wird ein oberer Grenzwert vom ermittelten Schweißmaß überschritten oder ein unterer Grenzwert unterschritten, dann wird als nächster Schritt der Schritt (66) ausgeführt. Die Toleranzwerte müssen nicht gleich groß sein.

Liegt das Schweißmaß innerhalb der durch die äußeren und inneren Grenzwerte eingeschlossenen Bereiche, dann wird das Herstellungsverfahren mit einem Schritt (86) fortgesetzt, in dem ein neuer Sollwert für das Schweißmaß aus n Werten als arithmetischer Mittelwert berechnet wird. Die n Werte beziehen sich auf den zuletzt festgestellten Wert und die in den vorausgegangenen Herstellungsschritten festgestellten Schweißmaße. Nach der Berechnung und Abspeicherung des neuen Sollwerts wird im folgenden Schritt (88) die Ultraschallvorrichtung durch Öffnen der Werkzeuge, d.h. durch das Öffnen des Vorverdichterraums (10) für die Entnahme des Schweißprodukts freigegeben. In einen, weiteren Schritt (90) wird die ausgeführte Schweißung in einem die Anzahl einwandfreier Schweißungen angebenden Zähler berücksichtigt. Die bei der Schweißung vorhandenen Parameter werden in eine Statistikdatei eingeschrieben.

Das Herstellungsverfahren ist damit abgeschlossen, was in Fig. 2 mit dem Schritt (92), der mit "Ende" bezeichnet ist, angedeutet ist. Ein neues Herstellungsverfahren beginnt nach der Entnahme des Schweißprodukts bei betriebsbereiter Ultraschallschweißvorrichtung mit dem Schritt (54).

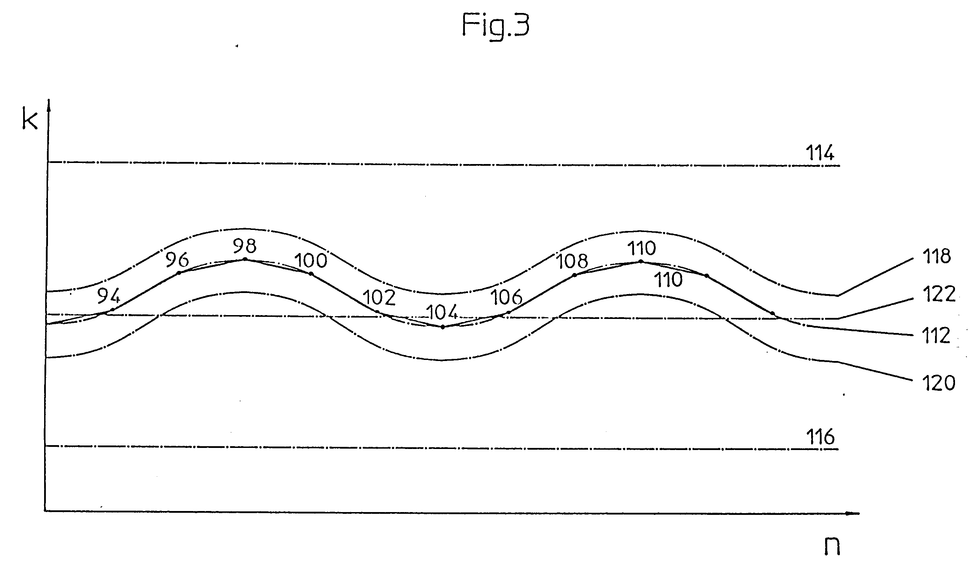

Die Fig. 3 zeigt beispielhaft mehrere in verschiedenen Herstellungsschritten, die jeweils mindestens die Schritte (54) bis (90) umfassen, bestimmte Kompaktiermaße in Abhängigkeit von der zeitlichen Durchführung der Schritte. Die Werte der Kompaktiermaße K sind in Ordinatenrichtung aufgetragen, während die Anzahl n der Kompaktierungen in Abszissenrichtung dargestellt ist. Die Kompaktiermaße (94), (96), (98), (100), (102), (104), (106), (108), (110) sind als Istwert dargestellt und können durch eine gemittelte Kurve (112) miteinander verbunden werden. Ein äußerer oberer Grenzwert (114) und ein äußerer unterer Grenzwert (116) sind als Vergleichswerte durch Einrichtung der Maschine bestimmt und konstant. Aus den arithmetischen Mittelwerten von n Kompaktiermaßen (n z.B. 3 .... 50), die in aufeinanderfolgenden Herstellungsschritten bestimmt werden, werden mittels eines Toleranzmaßes, das den Mittelwerten hinzugefügt oder von diesen subtrahiert wird, eine innere, obere Grenze (118) und eine untere innere Grenze (120) bestimmt, deren jeweilige dem gleichen Zeitpunkt wie die Kompaktiermaße zugeordneten Werte bestimmt und mit diesen verglichen werden. Ein Sollwert (122) wird zu Beginn des Verfahrens durch das Einrichten der Maschine eingestellt. Mit der Verwendung der inneren Grenzwerte können Fehler trotz Langzeitflüsse auf das Herstellungsverfahren besser erkannt werden.

Das obige Verfahren erlaubt eine fortlaufende Überprüfung der Herstellungsprozesse von verschweißten Leitern bzw. Litzen. Die Herstellungsprozesse werden durch die Steuereinrichtung (46) gesteuert.

## Patentansprüche

1. Verfahren zum Kompaktieren und anschließenden Verschweißen von elektrischen Leitern, insbesondere zur Herstellung von Durchgangs- oder Endknoten von Litzen, mittels Ultraschall in einem an die Leiter anpaßbaren Verdichtungsraum (10), wobei die zu verschweißenden Leiter zunächst kompaktiert und sodann verschweißt werden,
**dadurch gekennzeichnet**,
daß nach der Kompaktierung der Leiter ein die Größe der Kompaktierung repräsentierender Wert gemessen oder aus Meßwerten bestimmt und wenigstens mit einem oberen und einem unteren, auf einen Sollwert bezogenen Grenzwert verglichen wird, daß bei einem Wert, der außerhalb des durch die Grenzwerte eingeschlossenen Bereichs liegt, die Schweißung nicht ausgeführt und bei einem Wert, der innerhalb des durch die Grenzwerte eingeschlossenen Bereichs liegt, der Wert mit bei vorherigen Arbeitsgängen bestimmten Werten zu einem neuen Sollwert für die Überprüfung nachfolgender Kompaktierarbeitsgänge verrechnet wird und die Schweißung ausgeführt wird und/oder daß ein bei oder nach Beendigung der Schweißung vorhandener Wert wenigstens einer für den Schweißvorgang repräsentierender Größe gemessen oder aus Meßwerten bestimmt und wenigstens mit einem oberen und einem unteren auf einen Sollwert bezogenen Grenzwert verglichen wird und daß bei einem außerhalb des durch die Grenzwerte eingeschlossenen Bereichs liegenden Wert ein Fehler angezeigt und bei einem innerhalb dieses Bereichs liegenden Wert dieser mit bei vorherigen Arbeitsgängen bestimmten Werten zu einem neuen Sollwert für die Überprüfung nachfolgender Schweißarbeitsgänge verrechnet wird.

2. Verfahren insbesondere nach Anspruch 1,
**dadurch gekennzeichnet**,
daß die Leiter während der Kompaktierung mit Ultraschall beaufschlagt werden, dessen Stärke geringer als die für eine Verschweißung erforderliche Stärke ist.

3. Verfahren nach Anspruch 1 oder 2,
**dadurch gekennzeichnet**,
daß der für die Größe der Kompaktierung maßgebliche Wert der Querschnitt des Verdichtungsraums nach Beendigung der Kompaktierung oder ein dem Querschnitt proportionaler Wert ist.

4. Verfahren nach Anspruch 1 oder 2,
**dadurch gekennzeichnet**,
daß die für den Schweißvorgang maßgebliche Größe der Querschnitt des Verdichtungsraums bei Beendigung des Schweißens oder eine dem Querschnitt proportionale Größe ist.

5. Verfahren nach einem oder mehreren der vorhergehenden Ansprüche,
**dadurch gekennzeichnet**,
daß der bei oder nach Beendigung der Kompaktierung gemessene oder aus Meßwerten bestimmte Wert und/oder der bei oder nach Beendigung der Schweißung gemessene oder aus Meßwerten bestimmte Wert mit einem fest vorgegebenen oberen und einem unteren Grenzwert und mit einem weiteren oberen und einem unteren Grenzwert verglichen werden, der sich jeweils aus dem im jeweiligen Arbeitsgang gültigen Sollwert für die Kompaktierung bzw. Schweißung zuzüglich eines zulässigen positiven oder negativen Toleranzwertes zusammensetzt.

6. Verfahren nach einem oder mehreren der vorhergehenden Ansprüche,
**dadurch gekennzeichnet**,
daß die Sollwerte vorzugsweise als arithmetische Mittelwerte aus mehreren Werten vorangegangener Herstellungsschritte berechnet werden.

7. Verfahren nach Anspruch 6,
**dadurch gekennzeichnet**,
daß die Anzahl n der Werte, die aus vorangegangenen Herstellungsschritten für die Sollwertbestimmung verwendet werden, vorzugsweise zwischen 3 und 50 liegt.

8. Verfahren nach einem oder mehreren der vorhergehenden Ansprüche,
**dadurch gekennzeichnet**,
daß die Zeitdauer des Anstehens der Schweißparameter während der Schweißung mit einer vorgegebenen Zeitdauer verglichen wird und daß bei Überschreitung der vorgegebenen Zeitdauer eine Fehlermeldung erzeugt wird.

9. Verfahren nach einem oder mehreren der vorhergehenden Ansprüche,
**dadurch gekennzeichnet**,
daß eine Fehlermeldung in einer Statistikdatei gespeichert bzw. berücksichtigt wird.

10. Verfahren nach einem oder mehreren der vorhergehenden Ansprüche,
**dadurch gekennzeichnet**,
daß bei Werten über die Kompaktierung und Schweißung, die innerhalb der oberen und unteren Grenzwerte liegen, der Schweißvorgang in einer Statistikdatei gespeichert bzw. berücksichtigt wird und daß die Schweißparameter gespeichert werden.

11. Verfahren zum Schweißen und gegebenenfalls vorherigen Kompaktieren von Material wie Kunststoffmaterial wie -pulver mittels Ultraschall in einem das Material aufnehmenden Verdichtungsraum, wobei
ein bei oder nach Beendigung der Schweißung vorhandener Wert wenigstens einer für den Schweißvorgang maßgeblichen Größe gemessen oder aus Meßwerten bestimmt und wenigstens mit einem oberen und unteren, auf einen Sollwert bezogenen Grenzwert verglichen wird und bei einem außerhalb des durch die Grenzwerte eingeschlossenen Bereichs liegenden Wert ein Fehler angezeigt und bei einem innerhalb dieses Bereichs liegenden Wert dieser mit bei vorherigen Arbeitsgängen bestimmten Werten zu einem neuen Sollwert für die Überprüfung nachfolgender Schweißarbeitsgänge verrechnet wird und/oder wobei nach der Kompaktierung des Materials ein die Größe der Kompaktierung angebender Wert gemessen oder aus Meßwerten bestimmt und wenigstens mit einem vorgegebenen oberen und einem unteren, auf einen Sollwert bezogenen Grenzwert verglichen wird und bei einem Wert, der außerhalb des durch die Grenzwerte eingeschlossenen Bereichs liegt, die Schweißung nicht ausgeführt und bei einem Wert, der innerhalb des durch die Grenzwerte eingeschlossenen Bereichs liegt, der Wert mit bei vorherigen Arbeitsgängen bestimmten Werten zu einem neuen Sollwert für die Überprüfung nachfolgender Kompaktierarbeitsgänge verrechnet wird und die Schweißung ausgeführt wird.

## Claims

1. A process for the compaction and subsequent welding of electric conductors, in particular for the production of through- or end nodes of stranded wires, using ultrasound in a compaction chamber (10) which can be adapted to the conductors, wherein the conductors to be welded are firstly compacted and then welded, characterised in that after the compaction of the conductors a value representing the degree of compaction is measured or is determined from measured values and is compared at least with one upper and one lower limit value relating to a setpoint value, that in the case of a value falling outside of the range defined by the limit values the welding is not performed, and in the case of a value falling within the range defined by the limit values the value is computed with values determined during previous operations to form a new setpoint value for the checking of subsequent compaction processes and the welding is performed, and/or that a value, occurring upon or after the termination of the welding, of at least one variable representing the welding process is measured or is determined from measured values and is compared at least with one upper and one lower limit value relating to a setpoint value, and that in the case of a value falling outside of the range defined by the limit values an error is displayed, and in the case of a value falling within this range said value is computed with values determined during previous operations to form a new setpoint value for the checking of subsequent welding operations.

2. A process in particular according to Claim 1,
characterised in that during the compaction the conductors are subjected to ultrasound, the intensity of which is lower than the intensity required for welding.

3. A process according to Claim 1 or 2,
characterised in that the value governing the degree of compaction is the cross-section of the compaction chamber after the termination of the compaction or a value proportional to the cross-section.

4. A process according to Claim 1 or 2,
characterised in that the variable governing the welding process is the cross-section of the compaction chamber upon the termination of the welding or a value proportional to the cross-section.

5. A process according to one or more of the previous claims,
characterised in that the value measured upon or after the termination of the compaction or determined from measured values and/or the value measured upon or after the termination of the welding or determined from measured values is/are compared with a fixed upper and lower limit value and with a further upper and lower limit value, which limit value is in each case composed of the setpoint value, relating to the respective operation, for the compaction and welding respectively including a permissible positive or negative tolerance value.

6. A process according to one or more of the preceding claims,
characterised in that the setpoint values are preferably calculated as arithmetical mean values from a plurality of values of preceding production steps.

7. A process according to Claim 6,
characterised in that the number n of the values from preceding production steps used to determine the setpoint values is preferably between 3 and 50.

8. A process according to one or more of the preceding claims,
characterised in that the duration of the welding parameters during the welding is compared with a preset duration and that in the event of the overshooting of the preset duration an error message is generated.

9. A process according to one or more of the preceding claims,
characterised in that an error message is stored in a statistics data file and taken into consideration.

10. A process according to one or more of the preceding claims,
characterised in that in the case of compaction and welding values which fall within the upper and lower limit values, the welding process is stored in a statistics data file and taken into consideration and that the welding parameters are stored.

11. A process for the welding and optional previous compaction of material such as plastics material and powder using ultrasound in a compaction chamber accommodating the material wherein a value, occurring upon or after the termination of the welding, of at least one variable governing the welding process is measured or is determined from measured values and is compared at least with one upper and lower limit value relating to a setpoint value and in the case of a value falling outside of the range defined by the limit values an error is displayed and in the case of a value falling within this range said value is computed with values determined during previous operations to form a new setpoint value for the checking of subsequent welding operations and/or wherein, following the compaction of the material, a value indicating the degree of the compaction is measured or determined from measured values and is compared at least with one predetermined upper and lower limit value relating to a setpoint value and that in the case of a value falling outside of the range defined by the limit values the welding is not performed and in the case of a value falling within the range defined by the limit values the value is computed with values determined during previous operations to form a new setpoint value for the checking of subsequent compaction operations and the welding is performed.

## Revendications

1. Procédé de compactage et ensuite de soudage de fils conducteurs électriques, en particulier pour fabriquer des noeuds de passage ou des noeuds terminaux de tresses, au moyen d'ultrasons, dans une chambre de compression (10), les conducteurs à souder étant d'abord compactés et ensuite soudés,
caractérisé en ce qu'
• on mesure, après le compactage des conducteurs, une valeur qui représente la grandeur du compactage, ou on la détermine à partir de valeurs de mesure, et on la compare à au moins une valeur limite supérieure et à une valeur limite inférieure rapportées à une valeur de consigne,
• dans le cas d'une valeur qui se trouve en dehors de la zone comprise entre les valeurs limites, on n'effectue pas le soudage et, dans le cas d'une valeur qui se trouve à l'intérieur de la zone comprise entre les valeurs limites, on combine la valeur avec des valeurs déterminées lors de la séquence de travail précédente, pour obtenir une nouvelle valeur de consigne pour le contrôle des séquences de compactage suivantes, et on effectue le soudage et/ou
• on mesure une valeur, qui existe à la fin du soudage ou après celui-ci, d'au moins une grandeur qui représente le processus de soudage, ou on la détermine à partir de valeurs de mesure, et on la compare avec au moins une valeur limite supérieure et une valeur limite inférieure se rapportant à une valeur de consigne, et
• dans le cas d'une valeur qui se trouve en dehors de la zone comprise entre les valeurs limites, on indique une erreur et, dans le cas d'une valeur qui se trouve à l'intérieur de cette zone, on combine cette valeur avec des valeurs déterminées lors des séquences de travail précédentes, pour obtenir une nouvelle valeur de consigne pour le contrôle des séquences de travail suivantes.

2. Procédé en particulier selon la revendication 1,
caractérisé en ce qu'
on expose les conducteurs, pendant le compactage, à des ultrasons dont l'intensité est plus faible que l'intensité nécessaire pour un soudage.

3. Procédé selon la revendication 1 ou 2,
caractérisé en ce que
la valeur déterminante pour la grandeur du compactage est la section transversale de la chambre de compression après la fin du compactage, ou une valeur proportionnelle à la section transversale.

4. Procédé selon la revendication 1 ou 2,
caractérisé en ce que
la grandeur déterminante pour le processus de soudage est la section transversale de la chambre de compression à la fin du soudage, ou une grandeur proportionnelle à la section transversale.

5. Procédé selon l'une ou plusieurs des revendications précédentes,
caractérisé en ce que
la valeur mesurée à la fin ou après la fin du compactage, ou déterminée à partir de valeurs de mesure, et/ou la valeur mesurée à la fin ou après la fin du soudage, ou déterminée à partir de valeurs de mesure, est comparée à une valeur limite supérieure et à une valeur limite inférieure prédéfinies de façon fixe, ainsi qu'à une autre valeur limite supérieure et à une valeur limite inférieure qui se compose de la valeur de consigne valable lors de la séquence de travail correspondante pour le compactage ou pour le soudage, y compris une valeur autorisée positive ou négative de tolérances.

6. Procédé selon l'une ou plusieurs des revendications précédentes,
caractérisé en ce que
les valeurs de consigne sont de préférence calculées comme des valeurs moyennes arithmétiques à partir de plusieurs valeurs des séquences de fabrication précédentes.

7. Procédé selon la revendication 6,
caractérisé en ce que
le nombre (n) des valeurs qui sont utilisées à partir des séquences de fabrication précédentes, est compris de préférence entre 3 et 50.

8. Procédé selon l'une ou plusieurs des revendications précédentes,
caractérisé en ce qu'
• on compare la durée pendant laquelle le paramètre de soudure subsiste pendant le soudage, à une durée prédéfinie, et
• en cas de dépassement de la durée prédéfinie, on produit l'annonce d'une erreur.

9. Procédé selon l'une ou plusieurs des revendications précédentes,
caractérisé en ce qu'
on met en mémoire ou on prend en considération, dans un fichier statistique de données, une information d'erreur.

10. Procédé selon l'une ou plusieurs des revendications précédentes,
caractérisé en ce que
• dans le cas de valeurs relatives au compactage et au soudage qui se trouvent à l'intérieur des valeurs limites supérieures et inférieures, on met en mémoire le processus de soudage dans un fichier de données statistiques, ou on le prend en considération, et
• on met en mémoire les paramètres du soudage.

11. Procédé de soudage et, le cas échéant, de compactage au préalable d'une matière telle qu'une matière plastique comme de la poudre synthétique, au moyen d'ultrasons, dans une chambre de compression recevant la matière, dans lequel
• on mesure une valeur, qui existe à la fin ou après la fin du soudage, d'au moins une grandeur déterminante pour le processus de soudage, ou on la détermine à partir de valeurs de mesure, puis on la compare à au moins une valeur limite supérieure et à une valeur limite inférieure rapportées à une valeur de consigne, et
• dans le cas d'une valeur qui se trouve en dehors de la zone comprise entre les valeurs limites, on indique une erreur et, dans le cas d'une valeur qui se trouve à l'intérieur de cette zone, on combine cette valeur avec des valeurs déterminées lors de séquences de travail précédentes, pour obtenir une nouvelle valeur de consigne pour le contrôle des séquences de soudage suivantes, et/ou
• l'on mesure une valeur qui indique, après le compactage de la matière, la grandeur du compactage, ou on la détermine à partir de valeurs de mesure, puis on la compare à au moins une valeur limite supérieure et à une valeur limite inférieure prédéfinies, se rapportant à une valeur de consigne,
• dans le cas d'une valeur qui se trouve en dehors de la zone comprise entre les valeurs limites, le soudage n'a pas lieu et, dans le cas d'une valeur qui se trouve à l'intérieur de la zone comprise entre les valeurs limites, on combine cette valeur avec des valeurs déterminées lors des séquences de travail précédentes, pour obtenir une nouvelle valeur de consigne pour le contrôle des séquences de travail suivantes, et on effectue le soudage.
